(19)

Europäisches
Patentamt
European
Patent Office
Office européen
des brevets

(11) **EP 1 995 571 A1**

(12) **EUROPEAN PATENT APPLICATION**
published in accordance with Art. 158(3) EPC

(43) Date of publication:
**26.11.2008 Bulletin 2008/48**

(51) Int Cl.:
**G01F 1/708** *(2006.01)*    **G01P 5/18** *(2006.01)*

(21) Application number: **07737837.0**

(22) Date of filing: **06.03.2007**

(86) International application number:
**PCT/JP2007/054287**

(87) International publication number:
**WO 2007/119313 (25.10.2007 Gazette 2007/43)**

(84) Designated Contracting States:
**DE**

(30) Priority: **14.03.2006 JP 2006069125**

(71) Applicant: **Surpass Industry Co., Ltd.
Gyoda-shi, Saitama 361-0037 (JP)**

(72) Inventors:
• **IMAI, Hiroshi
Gyoda-shi, Saitama 361-0037 (JP)**

• **MATSUSHIMA, Keiichi
Gyoda-shi, Saitama 361-0037 (JP)**
• **USHIGUSA, Yoshihiro
Gyoda-shi, Saitama 361-0037 (JP)**

(74) Representative: **Dempster, Benjamin John Naftel
Withers & Rogers LLP
Goldings House
2 Hays Lane
London
SE1 2HW (GB)**

(54) **CURRENT VELOCITY DETECTION METHOD AND CURRENT VELOCITY DETECTOR EMPLOYING HEAT SIGNAL**

(57)    A flow rate detection method using a heat signal that enables accurate flow rate measurement by eliminating sources of measurement error is provided. The flow rate detection method, using a heat signal, of writing a temperature-change heat signal in a medium traveling through a channel and detecting the heat signal with heat signal detecting means provided at a position away from the writing position, to measure a traveling speed of the medium, wherein first and second temperature sensors 20A and 20B, which are separated by a predetermined distance L, are disposed downstream of the writing position, and the traveling speed is calculated from a time difference at which the two temperature sensors 20A and 20B detecting the heat signal and from the distance L.

## FIG. 1A

EP 1 995 571 A1

# FIG. 1B

## Description

Technical Field

The present invention relates to a flow rate detection method and a flow rate detection apparatus for detecting the traveling velocity (flow rate) of a fluid using a heat signal in the form of a temperature change in the fluid.

Background Art

Thermal flowmeters for measuring the mass flow of a liquid using heat have been proposed in the past. In this case, heat is used to a detect temperature change, a temperature difference between two points, or a time difference in a temperature change etc.

A heat-transfer fluid detecting apparatus for measuring the angular velocity and the flow rate of a fluid acting in a channel on the basis of a change in the traveling time of heat through a fluid serving as a medium has been proposed. With this apparatus, the fluid flowing through the channel is heated by an AC-driven heating element, and the heat transferred by this fluid is detected by a heat sensor provided downstream. In this way, the angular velocity can be detected on the basis of the phase difference between the driving signal for the heating element and the detection signal from the heat sensor, or the flow rate can be determined by determining the heat traveling time on the basis of the phase difference between a waveform detected at the heat sensor and the heating AC waveform. (For example, refer to Patent Document 1.)

Patent Document 1: Japanese Unexamined Patent Application, Publication No. HEI-5-264567

Disclosure of Invention

With the above-described related art, however, the following sources of error are added to the actual traveling time because the flow rate is determined by detecting the phase difference or time difference from a driving (heating/cooling) signal for the heating element or a temperature signal detected at the temperature sensor downstream and by taking into consideration a distance L1 between the heating element and the temperature sensor.

In other words, when the time from the output of the driving signal for the heating element (heating/cooling timing signal) to performing heating/cooling by the heating element is represented by Ta, the time for the heating/cooling to be transmitted to the fluid is represented by Tb, the fluid traveling time is represented by Tc, and the time for the heat to be transmitted from the traveling fluid to the temperature sensor is represented by Td, the traveling velocity (flow rate) Va detected by a known apparatus is represented by the following equation:

$$Va = L1/(Ta+Tb+Tc+Td)$$

The actual traveling velocity (flow rate) V is represented by the following equation:

$$V = L1/Tc$$

As a result, it is clear that the times Ta, Tb, and Td added to the fluid traveling time Tc cause error tending to decrease the detected traveling velocity Va compared with the actual traveling velocity V. Such a measurement error becomes particularly large when the traveling velocity V increases.

In view of such background, it is desirable to develop the above-described flow rate detection method and flow rate detection apparatus, enabling accurate flow rate measurement without any measurement error by using a heat signal.

The present invention has been conceived in light of the problems described above, and it is an object of the present invention to provide a flow rate detection method and a flow rate detection apparatus that are capable of accurate flow rate measurement without any measurement error by using a heat signal.

In order to solve the above-described problems, the present invention provides the following solutions.

A first aspect of the present invention provides a flow rate detection method, using a heat signal, of writing a temperature-change heat signal in a medium traveling through a channel and detecting the heat signal with heat signal detecting means provided at a position away from the writing position, to measure a traveling speed of the medium, wherein first and second heat signal detecting means, which are separated by a predetermined distance L, are disposed downstream of the writing position, and the traveling speed is calculated from a time difference at which the two heat signal detecting means detecting the heat signal and from the distance L.

According to the present invention, since first and second heat signal detecting means, which are separated by a predetermined distance L, are disposed downstream of the writing position and the traveling speed is calculated from a time difference at which the two heat signal detecting means detect the heat signal and the distance L, the time difference in detecting the heat signal according to the same procedures and routes at two positions separated by the distance L can be acquired, and thus sources of error can be eliminated.

According to the present invention, it is preferable that medium-temperature detecting means for detecting the temperature of the medium before writing the heat signal be provided, and the heat signal be written based on the temperature detected by the medium-temperature detecting means. In this way, an optimal heat signal can be written according to the temperature of the medium, and a temperature change in the medium can be prevented from becoming a source of error.

According to the present invention, it is preferable that correcting means for matching reception levels for a heat-signal detection waveform detected by the first and second heat signal detecting means be provided, and the time difference be determined by comparing two heat-signal detection waveforms at identical signal levels with the reception levels matched by the correcting means. In this way, a level difference in a temperature change caused by the difference in the distance from the writing position can be corrected, and the time difference can be measured in all reception levels.

In this case, by using a triangular wave as the heat signal, the position of the apex where the slope changes can be easily estimated by performing linear interpolation.

A fifth aspect of the present invention provides a flow rate detection apparatus, using a heat signal, for writing a temperature-change heat signal in a medium traveling through a channel and detecting the heat signal with heat signal detecting means provided at a position away from the writing position, to measure a traveling speed of the medium, the flow rate detection apparatus including first and second heat signal detecting means separated by a predetermined distance L and disposed downstream of the writing position; and controlling means for calculating, by arithmetic processing, a traveling speed from a time difference at which the two heat signal detecting means detect the heat signal and from the distance L.

Since the present invention includes first and second heat signal detecting means separated by a predetermined distance L and disposed downstream of the writing position and controlling means for calculating the traveling speed from a time difference at which the two heat signal detecting means detect the heat signal and the distance L, the time difference in detecting the heat signal according to the same procedures and routes at two positions separated by the distance L can be acquired. Thus, the controlling means can calculate a accurate traveling speed from the time difference with the sources of error being eliminated and the distance L.

According to the present invention, it is preferable that medium-temperature detecting means for detecting the temperature of the medium before writing the heat signal be included, and the controlling means write the heat signal based on the detected temperature from the medium-temperature detecting means. In this way, an optimal heat signal can be written according to the temperature of the medium, and a temperature change in the medium can be prevented from becoming a source of error.

According to the present invention, it is preferable that the controlling means include correcting means for matching reception levels for a heat-signal detection waveform detected by the first and second heat signal detecting means, and the time difference be determined by comparing two heat-signal detection waveforms at identical signal levels with the reception levels matched by the correcting means. In this way, a level difference in a temperature change caused by the difference in the distance from the writing position can be corrected, and the time difference can be measured in all reception levels.

In this case, by using a triangular wave as the heat signal, the position of the apex where the slope changes can be easily estimated by performing linear interpolation.

According to the present invention, sources of time error that occurs during writing and detecting a heat signal can be eliminated, and thus the traveling speed of the medium can be accurately measured. Sources of error caused by a temperature change in the medium can also be eliminated, and thus the traveling speed can be accurately measured.

Moreover, since a level difference in a temperature change caused by the difference in the distance from the writing position is corrected and the time difference is measured at all reception levels, the measurement response time can be shortened by appropriately setting the measurement intervals. Accordingly, the response time can be significantly shortened, and the effect of noise can be reduced by averaging due to the higher number of measurement points.

Consequently, a significant advantage is obtained; namely, a flow rate detection method and a flow rate detection apparatus in which sources of measurement errors are eliminated and which are able to measure an accurate traveling speed (flow rate) are provided.

Brief Description of Drawings

[FIG. 1] Fig. 1A is a plan view illustrating a flow rate detection method and a flow rate detection apparatus, using a heat signal, according to a first embodiment of the present invention.
[FIG. 1A] Fig. 1B is a diagram for explaining a distance L.
[FIG. 2] Fig. 2 is a block diagram illustrating an example configuration of the flow rate detection apparatus shown in Fig. 1.
[FIG. 3A] Fig. 3A is a cross-sectional view, taken along line A-A in Fig. 1A, of an example configuration of a heat signal writing device.
[FIG. 3B] Fig. 3B is a perspective view of a channel supporting member shown in Fig. 3A.
[FIG. 4] Fig. 4 illustrates a flow rate detection method and a flow rate detection apparatus, using a heat signal, according to a second embodiment of the present invention and is a block diagram of an example configuration of the flow rate detection apparatus.

[FIG. 5] Fig. 5 illustrates sine-wave heat signals (temperature versus time) written based on the temperature of a medium detected by medium-temperature detecting means before writing the heat signal (for example, 50°C).

[FIG. 6] Fig. 6 illustrates the time difference measurement of sine-wave heat signals at all reception levels by correcting the reception level.

[FIG. 7] Fig. 7 illustrates the reception level correction for triangular-wave heat signals.

Explanation of Reference Signs

1: channel
10: heat signal writing device
11: Peltier elements
20A: first temperature sensor
20B: second temperature sensor
30, 30A: control unit (controlling means)

Best Mode for Carrying Out the Invention

A flow rate detection method and flow rate detection apparatus according to an embodiment of the present invention, using a heat signal, will be described with reference to the drawings.

First Embodiment

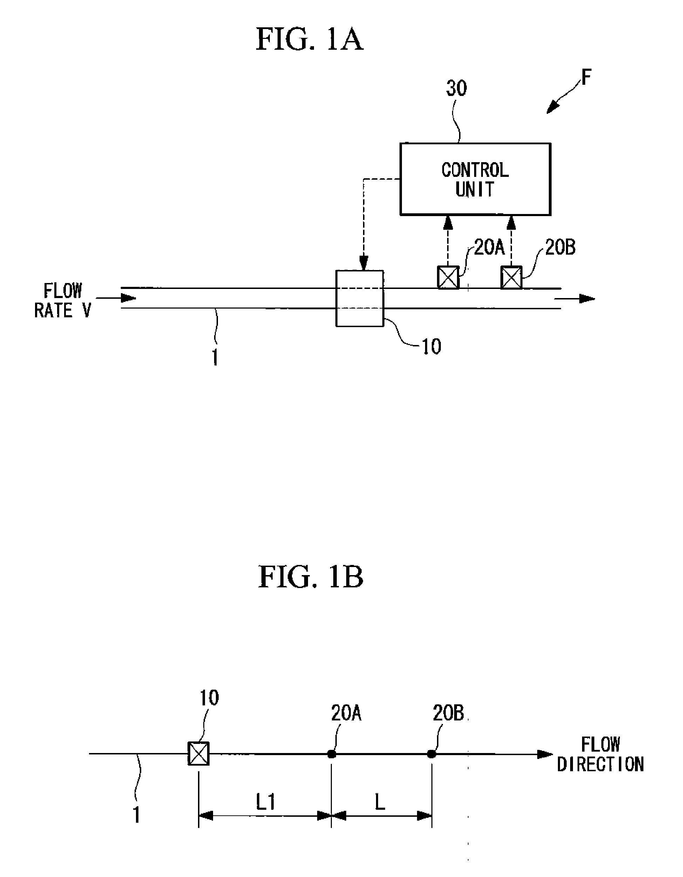

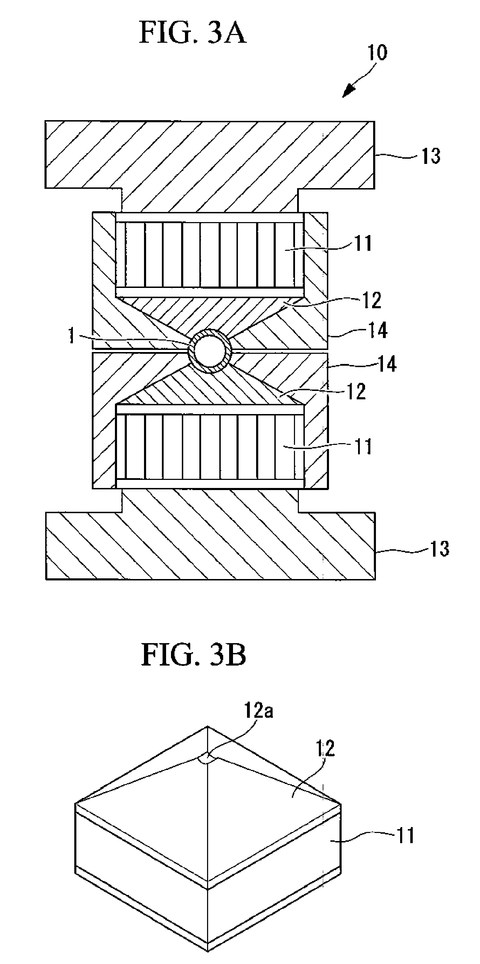

In a first embodiment shown in Figs. 1A to 3B, a flowrate detector F includes a heat signal writing device 10 which is provided at an appropriate position in a channel 1 and which writes a heat signal; a first temperature sensor 20A for detecting the written heat signal at a position away from the heat signal writing device 10; a second temperature sensor 20B which is disposed a predetermined distance L away from the first temperature sensor 20A and which detects the heat signal written by the heat signal writing device 10; and a control unit 30 that is electrically connected to the heat signal writing device 10, the first temperature sensor 20A, and the second temperature sensor 20B via wires.

The heat signal writing device 10 is secured at an appropriate position in the channel 1 through which a medium flows at a flow rate v and constitutes heat-signal writing means for writing a heat signal in the medium flowing through the channel 1. The heat signal writing device 10 is a device for writing a heat signal having a specific temperature change in the medium flowing through the channel 1 and is capable of writing a heat signal with a temperature change according to a desired pattern by heating or cooling using heat source elements, such as Peltier elements.

Peltier elements suitable for use as heat source elements are each constructed by bonding p-type and n-type thermoelectric semiconductors and copper electrodes and have a function of transferring and radiating heat absorbed from one bonding surface to another bonding surface by applying a direct current, for example, from the n-type thermoelectric semiconductor. Such heat absorption is referred to as the Peltier effect, and by reversing the flow direction of the direct current (toward the p-type thermoelectric semiconductor), the traveling direction of heat can be completely reversed. Therefore, heating and cooling can be reversed by controlling the power distribution in order to selectively switch between heating by radiation and cooling by absorption, and thus, highly accurate temperature control becomes possible. In the following description, the heat source elements are assumed to be Peltier elements. However, it is also possible to use, for example, a metal resistor (such as nichrome wire) for heat generation, a high-frequency electromagnetic induction heater, a Seebeck effect element, a laser, a light source, or microwaves.

The heat signal writing device 10, which is shown in Fig. 3A, includes a pair of Peltier elements 11. The upper and lower surfaces of each Peltier element 11 are held by a channel supporting member 12 and a heat sink 13, respectively, the channel supporting member 12 and the heat sink 13 being made of copper, thus having excellent heat conductivity. A bisectional structure is constructed by a heat-resistant resin 14 covering the periphery of the pairs of Peltier elements 11 and the channel supporting members 12, excluding a contact section 12a of the channel supporting member 12, which supports the channel 1 by being in direct contact therewith. In such a case, it is preferable to use fluorine-containing resin, such as polytetrafluoroethylene, as the heat-resistant resin 4.

The channel supporting members 12 are each shaped as a quadrangular pyramid, such as that shown in Fig. 3B, in order to minimize the contact area with the channel 1. The contact section 12a, which contacts the channel 1 and writes a heat signal, is formed at the tip of the channel supporting member 12.

The pair of Peltier elements 11 is secured by suitable securing means while substantially the entire circumference of the channel 1 is surrounded by the contact sections 12a. Therefore, the positions where the channel contact surfaces 12a contact the channel 1 are the writing position of the heat signal.

The first temperature sensor 20A is mounted at a predetermined detection position away from the writing position where the heat signal writing device 10 wrote the heat signal and is heat-signal reading means for detecting the temperature of the medium passing by the detection position. In the example configuration of the flow rate detector F shown in Fig. 1A, a first detection position is set by mounting the temperature sensor 20 at a predetermined distance L1 downstream from the writing position in the flow direction of the medium flowing through the channel 1. As the temperature sensor 20A, for example, a thermocouple, a semiconductor temperature sensor, an infrared sensor, or a thermistor, including a posistor, can be used.

The second temperature sensor 20B is disposed downstream of the first temperature sensor 20A, a predetermined distance L away therefrom, and is heat-signal reading means for detecting the temperature of the medium passing by the detection position. The second temperature sensor 20B is the same as the above-described first temperature sensor 20A, except that it is mounted at a second position different from that of the first temperature sensor 20A.

The control unit 30 is controlling means for the flow rate detector F and is connected to the above-described heat signal writing device 10 and the first and second temperature sensors 20A and 20B via wires. The control unit 30 has a function of calculating the traveling volume and traveling velocity of the medium by performing arithmetic processing based on, for example, the traveling distance (i.e., distance L) from the first temperature sensor 20A at the first detection position and the second temperature sensor 20B at the second detection position and the time difference at which the temperature sensors 20A and 20B detect the heat signal.

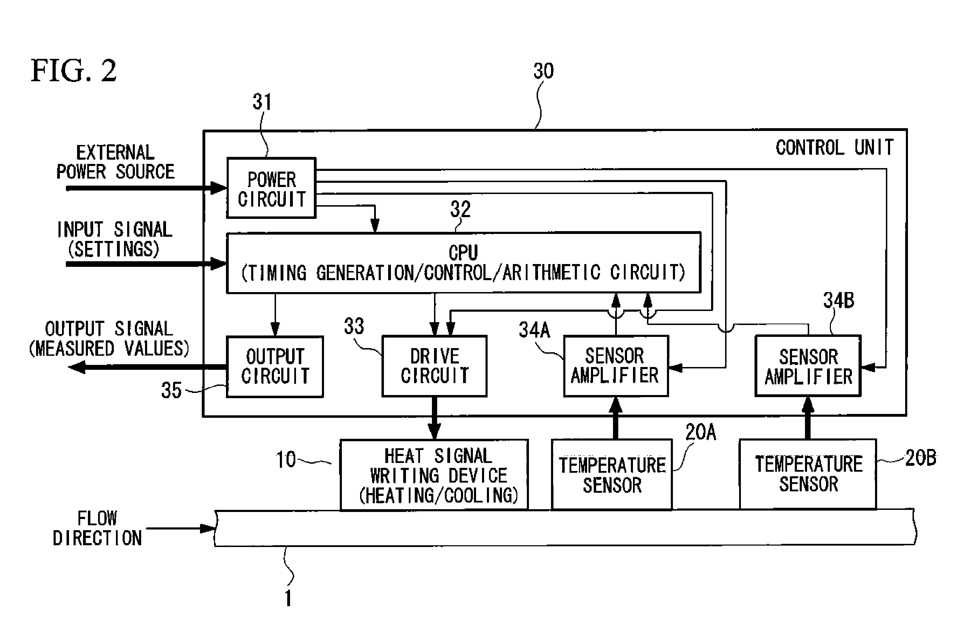

Fig. 2 is a block diagram illustrating an example configuration of the control unit 30, including a power circuit 31 that receives power from an external power source used for the flow rate detector F; a CPU 32 that receives input signals for various settings from an external unit and performs various types of arithmetic processing and control; a drive circuit 33 that controls the power distribution to the Peltier elements 11 in order for the heat signal writing device 10 to write a heat signal; a sensor amplifier 34A that amplifies the value detected by the first temperature sensor 20A; a sensor amplifier 34B that amplifies the value detected by the second temperature sensor 20B; and an output circuit 35 that outputs the calculated traveling volume and traveling velocity (i.e., measured values) of the medium to an external unit. In such a case, the external unit may be various switches and displays, for various settings, provided on the control unit 30 or may be a control unit of an apparatus that uses the measured values in a secondary manner.

The flow rate detector F that is configured as described above measures the traveling volume and traveling velocity of the medium flowing through the channel 1 at a flow rate v by employing a flow rate detection method described below. In this case, the medium flowing through the channel 1 may be a liquid, a gas, or a solid (powder). In the gas and solid cases, the channel 1 is limited to that having sealed pipes. However, for liquid, the channel 1 may be sealed or, instead, may be partially open, like a gutter.

The Peltier elements 11 of the heat signal writing device 10 receive power from the drive circuit 33 of the control unit 30 and write a heat signal by heating or cooling. The heat signal is transmitted to the channel 1 through the channel supporting members 12 in close contact with the Peltier elements 11 and is further transmitted from the walls of the channel 1 to the medium flowing inside. At this time, there is no substantial loss in the heat signal written by the heat signal writing device 10 is because the channel supporting members 12 have excellent heat conductivity. Since the area where the contact sections 12a contact the channel 1 is minimized, the writing pattern of the heat signal can be clearly transmitted to the channel 1 and the medium inside. In other words, the pattern of temperature change characteristic to the heat signal written by the heat signal writing device 10 is clearly transmitted and written in the medium flowing through the channel 1.

It is preferable that the temperature change of the heat signal written by the heat signal writing device 10, i.e., a heat signal with a temperature change according to a specific writing pattern, be a pulsed temperature change, a sine wave (or a similar wave) temperature change, or a triangular-wave shaped (or a similar shape) temperature change. The frequency of the writing pattern of such a heat signal can be appropriately changed to provide a specific heat signal. In addition, with a triangular-wave shaped temperature change, a specific heat signal can be provided by appropriately changing the duty ratio.

In addition to the frequency and duty ratio, the offset level of the above-described writing pattern of the heat signal can be appropriately changed to provide a specific heat signal.

When the heat signal writing device 10 writes a heat signal having a specific temperature change, a writing control signal for generating the timing of heating or cooling by the Peltier elements 11 is output from the CPU 32 to the drive circuit 33. Since the drive circuit 33 controls the power distributed to the Peltier elements 11 on the basis of the writing control signal, the flow direction and the current value of the current supplied to the Peltier elements 11 can be appropriately changed. As a result, since desired heating or cooling is performed by the Peltier elements 11 according to the power distribution, a heat signal can be written in the medium with a writing pattern having a specific temperature change.

Since the heat signal written in the medium in this way moves through the channel 1 along the flow of the medium, the heat signal is detected by the first temperature sensor 20A and the second temperature sensor 20B, which are mounted downstream in the flow direction. The detection results are input to the sensor amplifiers 34A and 34B, respectively, of the control unit 30 as an electrical signal, and a signal of the detected value amplified there is input to the CPU 34.

Since the distance L, which is equivalent to the traveling distance from the first temperature sensor 20A to the second temperature sensor 20B, is determined in advance, the CPU 34 performs arithmetic processing to calculate the traveling volume and the traveling velocity of the medium on the basis of the time difference at which the temperature sensors 20A and 20B detect the same heat signal. In other words, the time difference, which is the traveling time of the heat signal traveling the distance L, is calculated, and the time difference is set as a heat conducting time T for the distance L.

Once the above-described heat conducting time T is determined, a traveling velocity V of the medium can be calculated by arithmetic processing based on the heat conducting time T and the known distance L by the following equation:

$$V = L/T$$

Since the heat conducting time T used here is the time difference in detecting the heat signal by the first temperature sensor 20A and the second temperature sensor 20B, which are substantially the same except that their mounting positions are separated by the distance L, the times Ta, Tb, and Td, which are the sources of error mentioned in the problems of the related art, have no effect, or since these values are the same for both sensors, the values cancel out.

In other words, after the writing control signal (driving signal) for the Peltier elements 11 is output, the time Ta until the Peltier elements 11 actually perform the heating/cooling and the time Tb until the heating/cooling by the Peltier elements 11 is transmitted to the medium does not have any effect on the time difference T. Since the time Td until the heat signal written in the medium is transmitted from the medium to the first temperature sensor 20A or the second temperature sensor 20B is the same value for either sensor, the time Td does not have any effect on the time difference T.

Therefore, it is possible to calculate an accurate traveling velocity V, not including sources of error in the time difference T, on the basis of the actual time difference T at which the two temperature sensors detect the heat signal and the predetermined distance L.

Second Embodiment

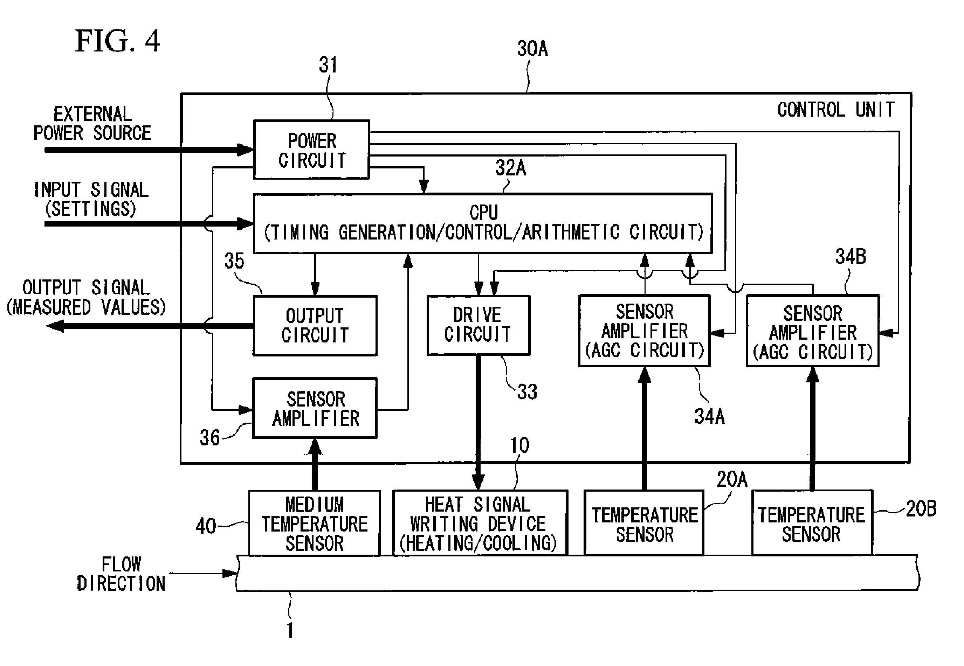

A second embodiment of the present invention will be described with reference to Figs. 4 to 7. The components that are the same as those according to the above-described first embodiment will be represented by the same reference numerals, and descriptions thereof will be omitted.

As shown in Fig. 4, according to this embodiment, a medium temperature sensor 40 is provided, at an appropriate position in the channel 1 upstream of the heat signal writing device 10, as medium-temperature detecting means for detecting the temperature of a medium before writing a heat signal. The medium temperature sensor 40 is electrically connected to a control unit 30A via a wire. A sensor amplifier 36 that amplifies a value detected at the medium temperature sensor 40 and that inputs this value to a CPU 32A is additionally provided inside the control unit 30A.

By providing such a medium temperature sensor 40, the control unit 30A outputs a control signal from the CPU 32A to the drive circuit 33 so that the heat signal writing device 10 writes a heat signal having a temperature change centered on the detected temperature of the medium. As a result, power is distributed to the heat signal writing device 10 on the basis of the control signal from the drive circuit 33, and the heat signal writing device 10 write a desired heat signal according to the temperature of the medium by performing optimal heating or cooling.

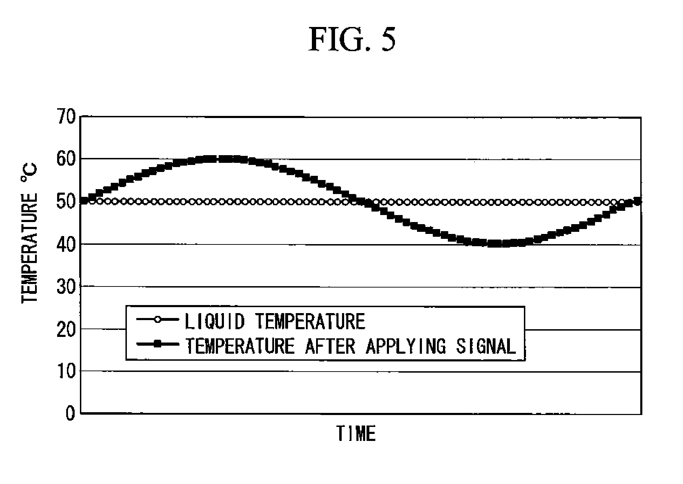

Fig. 5 illustrates a case in which a sine-wave heat signal matching the medium temperature detected at the medium temperature sensor 40 is written. For example, when the detected liquid temperature of the medium is 50°C, a heat signal (temperature after applying the signal) having a sine wave amplitude based on 50°C and changing over time, which is represented by the horizontal axis, is written. With such a heat signal, since the amount of heating that causes the medium temperature to increase cancels out with the amount of cooling that causes the medium temperature to decrease, the effect of heat, such as the temperature of the medium changing before and after measuring the flow rate, can be prevented.

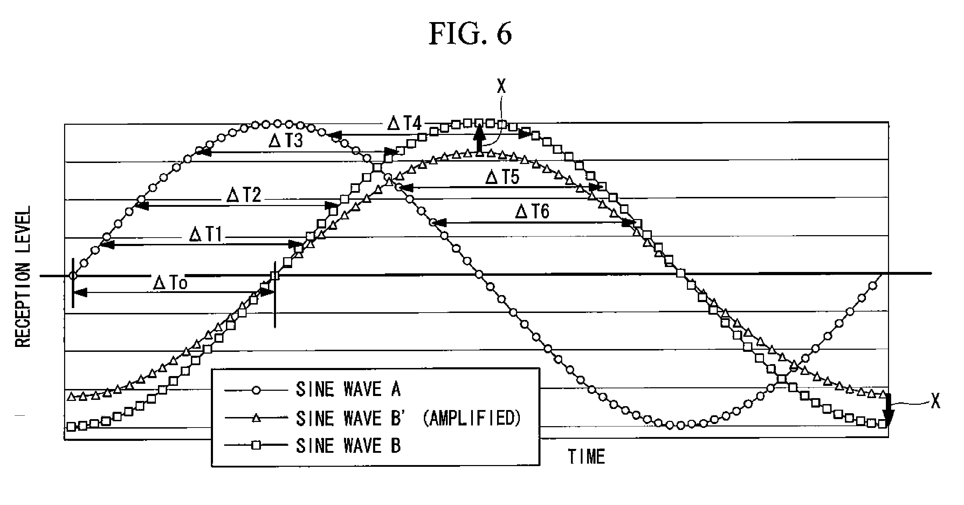

The sensor temperature levels of the above-described first temperature sensor 20A and second temperature sensor 20B differ because the distances thereof from the heat signal writing device 10 differ. In other words, as shown in Fig. 6, when the heat signal detected at the first temperature sensor 20A having a heat signal detection waveform of a sine wave A is compared with the heat signal detected at the second temperature sensor 20B having a heat signal detection waveform of a sine wave B, for the reception level of the sine wave B, which is downstream, the change (amplitude) has a lower peak. This is because the amount of heat radiating to the outside is greater with the longer channel 1. Such a difference in the reception level is not a problem when a zero crossing method of calculating time differences $\Delta T_0$ at the intersections of the sine waves A and B and the reference line is employed.

However, according to the zero crossing method, since the time difference at a point is measured from one cycle of the sine wave, the amplitude can be increased by increasing the cycle by reducing the signal writing speed of the heat signal. Therefore, when the zero crossing method is employed, the period between measurement times become long, and, as a result, there is a problem in that the measurement response time is long.

Accordingly, correcting means for matching the reception level of the sine waves A and B are provided inside the sensor amplifiers 34A and 34B in the control unit 30A. The correcting means amplifies the sine wave B having the low peak to form a sine wave B', as indicated by the arrow X, and amplifies and corrects the sine wave B' so that the peak values of the sine waves A and B' are the same, i.e., the amplitudes of the sine waves A and B' are the same.

As such correcting means, for example, an automatic gain control (AGC) circuit can be used. The correcting means can be realized by adding a similar correction function to the CPU 32A or by performing digital signal processing.

As described above, the time difference in the first and second temperature sensors 20A and 20B receiving the heat signal can be determined by comparing the two sine waves A and B', on which peak correction for matching the reception level has been performed, at any selected reception level.

In other words, as shown in Fig. 6, since the measurement level can be appropriately selected from all of the reception levels along the vertical axis and the time differences between the sine wave A and the sine wave B' (for example, ΔT1 to ΔT6) for the same reception level can be determined, time measurement at all reception levels becomes possible. Therefore, compared with the zero crossing method, the response time can be significantly shortened. Moreover, by increasing the number of measurement points for time measurement, the effect of noise can be reduced by averaging.

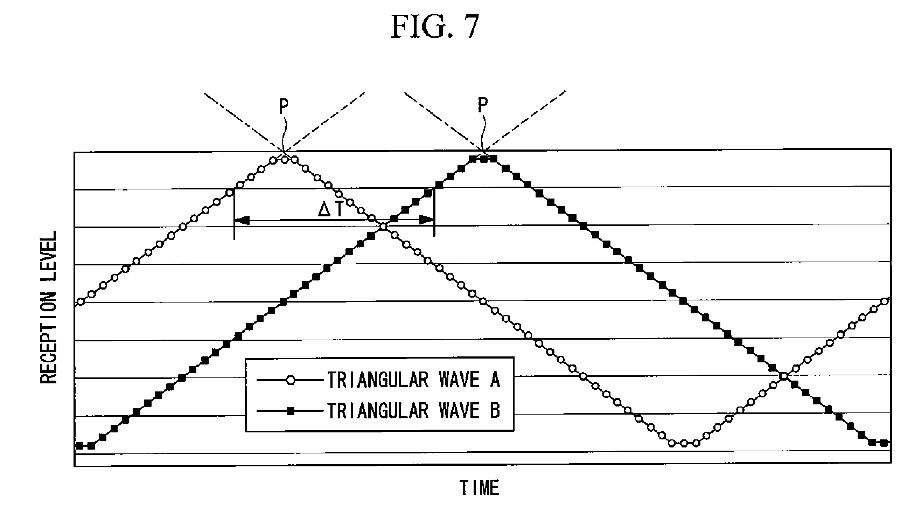

Fig. 7 illustrates a modification using a triangular-wave heat signal, instead of the above-described sine-wave heat signal.

Since the relationship between the time and temperature of the triangular-wave heat signal is linear, detection and correction of a peak P are easier compared with those of a sine wave. Therefore, a more accurate value can be obtained for time difference detection. In other words, since the response time of the heat signal is long, it is difficult to suddenly change the heat signal. Therefore, the waveform near the peaks becomes less clear even for triangular waves. However, in the case of a triangular wave, since the slopes of the straight lines on the ascending side and the descending side can be easily determined, the peak (slope changing point) P, which is the intersection of the two straight lines, can be easily estimated from the slopes.

The time difference ΔT can be determined for the two triangular waves A and B corrected in this way by selecting the same reception levels in a similar manner as for the sine wave, as shown in Fig. 6.

In this way, according to the above-described embodiments of the present invention, by aligning the first and second temperature sensors 20A and 20B, which detect a heat signal, at a distance L apart, sources of time errors that occur during writing and detecting the heat signal can be eliminated, and the traveling velocity of the medium can be accurately measured.

By providing the medium temperature sensor 40, sources of error due to the temperature change of the medium itself can be eliminated, and the traveling velocity of the medium can be accurately measured.

Since the first and second temperature sensors 20A and 20B are used, the difference in the temperature change level due to the difference in the distance from the writing position can be corrected, and the time difference can be measured at all reception levels. Therefore, the measurement time interval can be appropriately set to shorten the response time. In this way, the response time of measuring the traveling time is significantly shortened. In addition, since the number of measurement points is increased, the effect of noise can be reduced by averaging.

Accordingly, the flow rate detection method and flow rate detection apparatus, using a heat signal, are capable of eliminating the sources of measurement error and performing accurate measurement of the traveling velocity (flow rate).

The present invention is not limited to the above-described embodiment, and modifications may be made within the scope of the invention.

## Claims

1. A flow rate detection method, using a heat signal, of writing a temperature-change heat signal in a medium traveling through a channel and detecting the heat signal with heat signal detecting means provided at a position away from the writing position, to measure a traveling speed of the medium,
   wherein first and second heat signal detecting means, which are separated by a predetermined distance L, are disposed downstream of the writing position, and the traveling speed is calculated from a time difference at which the two heat signal detecting means detecting the heat signal and from the distance L.

2. The flow rate detection method using a heat signal according to Claim 1, wherein medium-temperature detecting means for detecting the temperature of the medium before writing the heat signal is provided, and the heat signal is written based on the temperature detected by the medium-temperature detecting means.

3. The flow rate detection method using a heat signal according to Claim 1 or 2, wherein correcting means for matching reception levels for a heat-signal detection waveform detected by the first and second heat signal detecting means is provided, and the time difference is determined by comparing two heat-signal detection waveforms at identical signal levels with the reception levels matched by the correcting means.

4. The flow rate detection method using a heat signal according to Claim 3, wherein the heat signal is a triangular wave.

5. A flow rate detection apparatus, using a heat signal, for writing a temperature-change heat signal in a medium traveling through a channel and detecting the heat signal with heat signal detecting means provided at a position away from the writing position, to measure a traveling speed of the medium, the flow rate detection apparatus comprising:

> first and second heat signal detecting means separated by a predetermined distance L and disposed downstream of the writing position; and
> controlling means for calculating, by arithmetic processing, a traveling speed from a time difference at which the two heat signal detecting means detect the heat signal and from the distance L.

**6.** The flow rate detection apparatus using a heat signal according to Claim 5, further comprising:

> medium-temperature detecting means for detecting the temperature of the medium before writing the heat signal,
> wherein the controlling means writes the heat signal based on the detected temperature from the medium-temperature detecting means.

**7.** The flow rate detection apparatus using a heat signal according to Claim 5 or 6, wherein the controlling means includes correcting means for matching reception levels for a heat-signal detection waveform detected by the first and second heat signal detecting means, and the time difference is determined by comparing two heat-signal detection waveforms at identical signal levels with the reception levels matched by the correcting means.

**8.** The flow rate detection apparatus using a heat signal according to Claim 7, wherein the heat signal is a triangular wave.

# FIG. 1A

FLOW
RATE V

CONTROL
UNIT

30

F

20A

20B

10

1

# FIG. 1B

10

20A

20B

FLOW
DIRECTION

1

L1

L

# FIG. 2

CONTROL UNIT

EXTERNAL POWER SOURCE →

INPUT SIGNAL (SETTINGS) →

31 — POWER CIRCUIT

32 — CPU (TIMING GENERATION/CONTROL/ARITHMETIC CIRCUIT)

30

OUTPUT SIGNAL (MEASURED VALUES) ←

35 — OUTPUT CIRCUIT

33 — DRIVE CIRCUIT

34A — SENSOR AMPLIFIER

34B — SENSOR AMPLIFIER

10 — HEAT SIGNAL WRITING DEVICE (HEATING/COOLING)

20A — TEMPERATURE SENSOR

20B — TEMPERATURE SENSOR

FLOW DIRECTION →

1

EP 1 995 571 A1

# FIG. 3A

10

13

11

12

1

14

14

12

11

13

# FIG. 3B

12a

12

11

# FIG. 4

EP 1 995 571 A1

# FIG. 5

# FIG. 6

EP 1 995 571 A1

# FIG. 7

EP 1 995 571 A1

<table>
<tr><td colspan="2">**INTERNATIONAL SEARCH REPORT**</td><td>International application No.<br>PCT/JP2007/054287</td></tr>
</table>

A.  CLASSIFICATION OF SUBJECT MATTER
*G01F1/708*(2006.01)i, *G01P5/18*(2006.01)i

According to International Patent Classification (IPC) or to both national classification and IPC

B.  FIELDS SEARCHED

Minimum documentation searched (classification system followed by classification symbols)
G01F1/708, G01P5/18

Documentation searched other than minimum documentation to the extent that such documents are included in the fields searched
Jitsuyo Shinan Koho        1922-1996    Jitsuyo Shinan Toroku Koho    1996-2007
Kokai Jitsuyo Shinan Koho   1971-2007    Toroku Jitsuyo Shinan Koho    1994-2007

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | Microfilm of the specification and drawings annexed to the request of Japanese Utility Model Application No. 192240/1985(Laid-open No. 99865/1987)<br>(Yamatake-Honeywell Co., Ltd.),<br>25 June, 1987 (25.06.87),<br>Full text; all drawings<br>(Family: none) | 1,2,5,6<br>3,4,7,8 |
| X | JP 2004-184177 A  (Nikkiso Co., Ltd.),<br>02 July, 2004 (02.07.04),<br>Full text; all drawings<br>(Family: none) | 1,5 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>20 April, 2007 (20.04.07) | Date of mailing of the international search report<br>01 May, 2007 (01.05.07) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2007/054287

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 61-114129 A  (Tokyo Keiso Co., Ltd.), 31 May, 1986 (31.05.86), Full text; all drawings (Family: none) | 4,8 |
| Y | JP 62-159014 A  (Hitachi, Ltd.), 15 July, 1987 (15.07.87), Full text; all drawings (Family: none) | 4,8 |
| Y | JP 63-88465 A  (Novatome), 19 April, 1988 (19.04.88), Full text; all drawings & EP 251867 A1 | 3,7 |
| Y | JP 54-22314 B2  (Hajime KATO), 06 August, 1979 (06.08.79), Full text; all drawings (Family: none) | 3,7 |

Form PCT/ISA/210 (continuation of second sheet) (April 2005)

**EP 1 995 571 A1**

## REFERENCES CITED IN THE DESCRIPTION

**Patent documents cited in the description**

- JP HEI5264567 B